# EUROPEAN PATENT APPLICATION

(11) **EP 1 847 963 A1**
(43) Date of publication of application: **24.10.2007**
(21) Application number: 06008180.9
(22) Date of filing: 20.04.2006
(51) Int. Cl.: G06T 11/20, G06T 15/20

(54) **Method and system for displaying visual information on a display**

(71) Applicant: Koninklijke KPN N.V., 2516 CK The Hague (NL)
(72) Inventor: Alberts, Albert Willem, 9745 DH Groningen (NL)
(74) Representative: Wuyts, Koenraad Maria

(57) **Abstract**

A method and a display are disclosed for displaying virtual visual information within a user's view of a real world environment. The display is a transparent display through which real-world information can be viewed. The method according to the present invention comprises the step of displaying, based on digital data, a virtual visual object on the display in order to make visual information visible on the display, which visual information is the aggregate of the virtual visual object and the real-world information visible through display. The digital data is received by an information receiving means comprised by the display from a communications network or a local storage device.

## Description

### FIELD OF THE INVENTION

This invention relates to a method and system for displaying visual information on a display.

### BACKGROUND OF THE INVENTION

For the viewing of virtual information many virtual reality systems exist that simulate reality. Virtual Reality (VR) is an environment that is simulated by a computer. Most virtual reality environments are primarily visual experiences, displayed either on a computer screen or through special stereoscopic displays, but some simulations include additional sensory information, such as sound through speakers or headphones. Users can interact with a virtual environment either through the use of standard input devices such as a keyboard or a mouse. The simulated environment can be similar to the real world, for example, simulations for pilot or combat training, or it can differ significantly from reality, as in VR games.

An example of the application of the concept of virtual reality is a head-mounted display on which virtual images can be displayed. When such a display is mounted on the head and thus is positioned near the eyes of a person, the experience of a virtual reality is created. Another example of virtual reality is described in US 2002/0044152, where a transparent graphical user interface is disclosed that presents information transparently on real world images to minimize obstructing the user's view of the real world images. This known system integrates computer-generated virtual information with real world images on a display, such as a head-mounted display of a wearable computer, whereby virtual information is presented in a way that creates little interference with the user's view of the real world images. The system further modifies how the virtual information is presented to alter whether the virtual information is more or less visible relative to the real world images. The transparent Ul possesses many features that are directed toward the goal of displaying virtual information to the user without impeding too much of the user's view of the real world.

Accordingly, the prior art discloses a technique to display virtual information to a user in a manner that does not disrupt, or disrupts very little, the user's view of the real world.

### PROBLEM DEFINITION

In the prior art virtual information is overlaid on a display in such a way that virtual information is integrated within a real world view whereby the virtual information causes a minimal distraction to the user. As a result, the virtual information will not obscure the real-world view of the user. The virtual information is in the prior art displayed transparently on the display. In this way the user can view the real-world through the display, while the virtual information informs the user about the real-world view.

A disadvantage of the prior art is that it relates to the issue of the focusing of the user to either the real-world view or to the virtual information. For instance, in US 2002/0044152 is referred to the aspect of safety according to which the real-world view is preferred to the virtual world when the user takes part of a traffic situation.

### AIM OF THE INVENTION

It is an object of the invention to eliminate the drawbacks of the prior art and to provide a system and a method for displaying visual information on a transparent display through which real-world information can be viewed.

### SUMMARY OF THE INVENTION

In accordance with this invention, a method is disclosed for displaying visual information on a display, the display being a transparent display through which real-world information can be viewed, the method comprising the step of displaying, based on digital data, a virtual visual object on the display so that the visual information that is visible on the display is the aggregate of the virtual visual object and the real-world information visible through display.

In a first aspect of the invention is disclosed that a virtual visual object can be displayed on a transparent display through which real-world information can be viewed, i.e. a method and a display are disclosed for displaying virtual visual information within a user's view of a real world environment. In this way, the visual information that is visible on the display is the aggregate of the virtual visual object and the real-world information visible through display. An advantage of this is that user can project for example a digital image in a real-world environment. For example, a user could with the method according to the present invention view how an additional wall would look like in a building. The user sees an area comprised by the building through the transparent display and views in addition to this the digital image of the wall. The overall view of the user is then the area of the building including the wall, presenting the user an impression of the situation as if the wall where already constructed within the area. It is then not required, for instance during a decision making process, to construct the wall in this building and it is sufficient to have a digital image available of the wall.

The virtual visual object is displayed on a display based on digital data received by an information receiving means. The information receiving means may or may not be comprised by a display according to the present invention. The digital data may for instance be a file that is PNG (Portable Network Graphics), vector based or JPEG encoded. However, there are no limitations with regard to the encoding type that is applied with regard to the digital data. The digital data may for instance be received from a local storage device that is available to the user. On this local storage device several instances of the digital data may be present so that the user can choose between a variety of virtual visual objects to be displayed on the display.

In another aspect of the present invention the digital data is received via a communications network. In this case the information receiving means comprises an interface to the communications network. For instance, a communication protocol is comprised by the information receiving means such as IP (Internet Protocol) or FTP (File Transfer Protocol). The communications network may be a fixed communications network or a mobile communications network. The digital data received via the communications network may originate from a server that is connected to the communications network.

In yet another aspect of the present invention the luminance of the displayed virtual visual object is correlated to the luminance of the real-time world information that is visible through the display. The luminance of the virtual visual object may automatically be determined in order to display the virtual visual object in a way that it corresponds to the characteristics of the real world environment visible through the display. For instance, on a bright day the luminance of a virtual visual object may be different than the luminance of the same virtual visual object on a cloudy day. The luminance of the real world environment could for instance be measured by means of a sensor that may be connected to the display. It is also possible for the user to adjust the luminance of the virtual visual object. This offers the user the possibility to emphasize the virtual visual object that is displayed within the real world environment that is visible through the display. Further, it is also possible that the user adjusts the transparency of the virtual visual object. With this it is possible to blend the virtual visual object in the real world environment.

In another aspect of the present invention the position of the virtual visual object on the display is determined according to information received via a second information receiving means. For example, the coordinates of the display where the virtual visual should be positioned on the display can be determined by the user and inputted via an input device. It may or may not be possible then that the position of the virtual visual object remains the same as the display is moved in order to view another part of the real world environment. It is also possible that the coordinates of the display where the virtual visual should be positioned on the display are received by the second receiving means from a pattern recognition system that may or may not be comprised by the display. If the virtual visual object is a door, for example, that is to be displayed in a door-post, the pattern recognition system determines the coordinates on the display in order to fit the virtual door within the door-post.

The virtual visual object can be a digital picture or may also be a digital video sequence. The letter can be useful if the user requires a dynamical impression of a virtual visual object within a real world environment instead of a static impression. If the virtual visual object is for example a video sequence of an opening door, the user is not only able to see if a door fits within a door-post but also able to view if it is possible to open the door without being hindered by an obstacle near the door-post. Further, the virtual visual object may also be a three-dimensional object.

In a possible embodiment the user may determine the location of the virtual visual object using for instance a cursor that can be moved around the display. When the user selects a location on the display, the virtual visual object will be positioned at the selected location, taking into account 3D aspects. This can be accomplished by adjusting, depending on the selected position on the display, the measures of the virtual visual object to be positioned on the display.

Another possible way for the user to determine the location of the virtual visual object is by using data gloves. A data glove is a glove equipped with sensors that sense the movements of the hand and interfaces those movements with a computer. Data gloves are commonly used in virtual reality environments. With the data glove, which is interconnected to the display, the user can catch the virtual visual object that is displayed on the display and move the virtual visual object to another position on the display. Also here 3D aspects could be taken into account.

Yet another possible way to determine the position of the virtual visual object is by means of a mechanism that enables the user to fixate the virtual visual object at a certain location in the real world environment that is viewed by the user through the display. When the display is moved relative to the real world environment, the virtual visual object will be positioned on another position of the display. For example, if the virtual object is positioned at the centre of the display, the virtual visual object will be positioned at the left side of the display if the display is moved to the right.

According to the present invention also a display is disclosed for for displaying visual information, the display being a transparent display through which real-world information can be viewed. The transparent display may comprise means for displaying, based on visual data, a virtual visual object on the display. In this way the displayed information on the display is the aggregate of the virtual visual object and the real-world information visible through display.

### BRIEF DESCRIPTION OF THE DRAWING FIGURE

The foregoing aspects and many of the attendant advantages of this invention will be explained by reference to the following detailed description, when taken in conjunction with the accompanying drawing, wherein:
FIG. **1a** illustrates an example of the view that the user has on the real world via the display according to the invention.
FIG. **1b** illustrates the view that the user has via the display according to the invention when a virtual visual object is displayed.
FIG. **2** shows the coordinates of a display according to the invention.
FIG. **3** depicts a schematic overview of some components of an embodiment of a display according to the invention.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

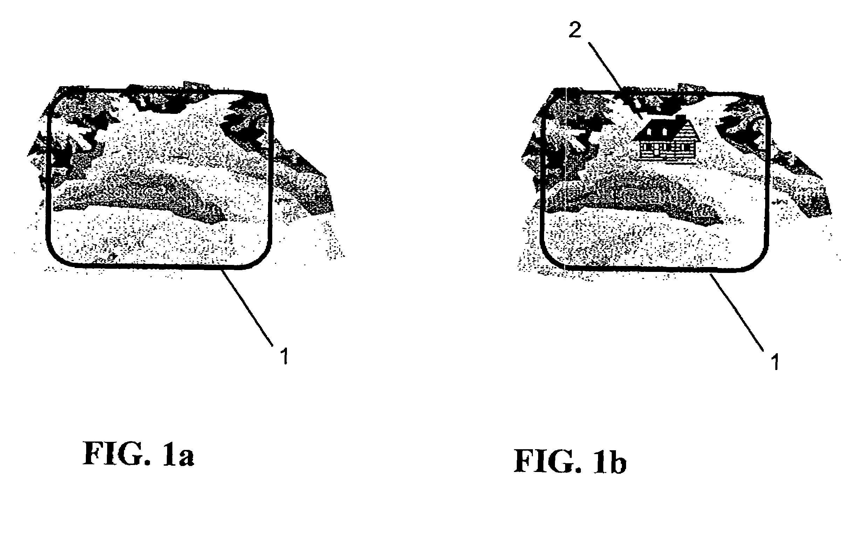

In FIG. **1a** an example is shown of the view that a user may have of the real world via a display (1). The display (1) is transparent so that the user can look through the display (1). The display (1) may for instance be a head-mounted display or a hand-held or wearable computer device.

in FIG. **1b** it is shown that a virtual visual object (2) is displayed on the display (1). The virtual visual object (2) represents a real world object that does not (yet) exist, or which is not available at the real world location that is viewed by the user via the display (1). For instance, a house which is designed but not built yet can be represented by the virtual visual object (2). By viewing through the display (1), the user has an impression of how the house would be situated in the real world. The visual information that is visible through the display (1) is the aggregate of the real world information and the virtual visual object (2). Thus, the user is able to view the virtual visual object (2) in the context of the real wood visible through the display (1). The virtual visual object (2) may or may not be transparently displayed.

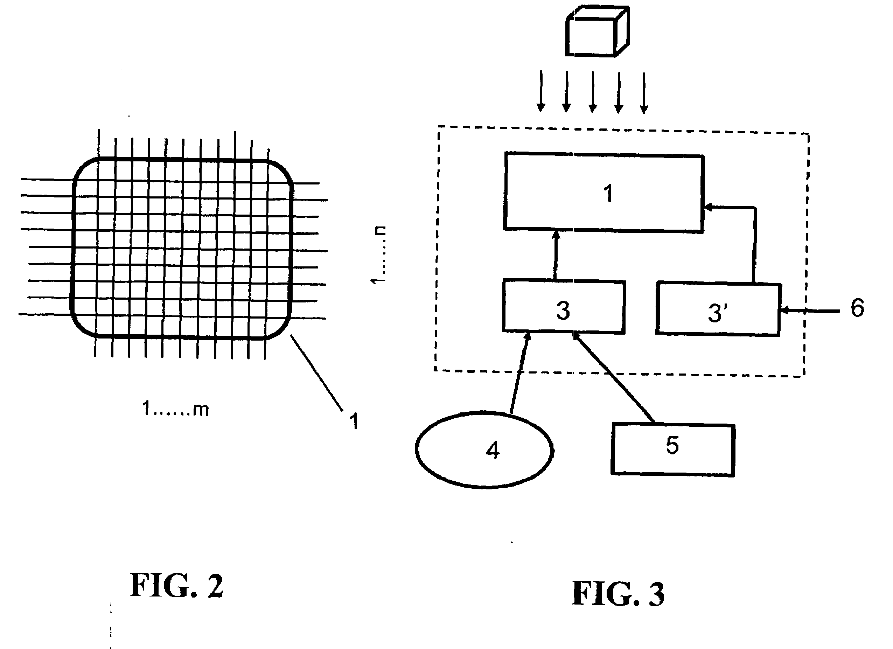

In FIG. **2** an example is shown of a coordinates scheme of the display (1). Information based on which the position of the virtual visual object (2) may be determined can be received via a second information receiving means (3'). The second information receiving means (3') can be connected to or integrated in display (1). The information received by the second information receiving means (3') can originate from several sources such as an input device (6) or a global positioning system. The input device (6) can be operated by the user that uses the display (1) in order to control the positioning of the virtual visual object (2) on the display. In order to communicate to the input device (6) the second information receiving means (3') may comprise communication interfaces such as Bluetooth or other wireless communication protocols. However, it may also be the case that the communication between the second information receiving means (3') and the input device (6) is via a wired communication protocol.

In a possible embodiment the user may determine the location of the virtual visual object (2) using a cursor that can be moved around the display (1). The user is then able to move the cursor, for instance controlled by a joy-stick, to location on the display where the virtual visual display (2) is supposed to be positioned. When the user selects a location on the display (1), the virtual visual object (2) will be positioned at the selected location, taking into account 3D aspects. When the user views the real world environment through the display (1), each location on the display (1) corresponds to a location in the real world environment whereby some real world environment locations are more remote from the user than other real world environment locations. Therefore, the measures of the virtual visual object (2) to be positioned on the display will depend on the selected position on the display (1) in order to take into account 3D-aspects.

FIG. **3** shows a number of possible components that are comprised by or connected to the display (1). A cube is depicted as a conceptual representation of a scene in the real world environment. A housing depicted as a dashed line may contain the display (1), the second information receiving means (3') and an information receiving means (3). The information receiving means (3) can be used to supply digital data to the display (1), whereby the digital data is used to display one or more virtual visual objects (2) on the display (1). The digital data may originate from several sources such as a server that is connected to a communications network (4) or a local storage device (5). For instance, the user may enter a request via the input device (6) for receiving at the display (1) an instance of the digital data residing at the server that is connected to the communications network (4). This request is then sent via the communications network (4) to the server after which the digital data instance is sent to the information receiving means (3) so that the corresponding virtual visual object (2) can be displayed. Although not depicted in FIG. **3**, it is also possible that the second information receiving means (3') receives information for determining the position of the virtual visual object (2) via the communications network (4).

## Claims

1. A method for displaying visual information on a display (1), the display (1) being a transparent display through which real-world information can be viewed, the method comprising the step of displaying, based on digital data, a virtual visual object (2) on the display (1) so that the visual information that is visible on the display (1) is the aggregate of the virtual visual object (2) and the real-world information visible through display (1).

2. Method according to claim 1, whereby said digital data is received by an information receiving means (3) comprised by the display (1) from a communications network (4) or a local storage device (5).

3. Method according to claim 1 or 2, whereby the luminance of the displayed virtual visual object (2) is correlated to the luminance of the real-time world information that is visible through the display (1).

4. Method according to claim 1 or 2, whereby the luminance or the transparency of the displayed virtual visual object (2) is adjustable by the user.

5. Method according to claim 1, 2, 3, or 4, whereby the position of the virtual visual object (2) on the display (1) is determined according to information received via a second information receiving means (3').

6. Method according to claim 5, whereby said information is received by the second receiving means (3') from an input device (6).

7. Method according to claim 6, whereby the input device (6) is a joy-stick.

8. Method according to claim 7, whereby the input device (6) is a data glove.

9. Method according to any of the claims 5-8, said information comprising the coordinates of the display (1) where the virtual visual is to be positioned.

10. Method according to claim 9, whereby said coordinates are received by the second receiving means (3') from a global positioning system.

11. Method according to claim 5, whereby said coordinates are received by the second receiving means (3') from a pattern recognition system (7).

12. Method of any of the preceding claims, whereby the measures of the virtual visual object (2) depend on the position of the virtual visual object (2) on the display (1).

13. Method of any of the preceding claims, whereby the virtual visual object (2) is a digital picture.

14. Method according to claim 13, the digital picture being encoded in portable network graphics format.

15. Method according to claim 13, the digital picture is vector based encoded.

16. Method according to any of the claim 1-12, whereby the virtual visual.object (2) is a digital video sequence.

17. Method according to claim 16, the digital video sequence being encoded in MPEG format.

18. Method according to any of the claim 1-12, whereby the virtual visual object (2) is a three-dimensional object.

19. A display (1) for displaying visual information, the display (1) being a transparent display through which real-world information can be viewed, and the displayed visual information is the aggregate of a virtual visual object (2) that is based on digital data and the real-world information visible through display (1).

20. Display (1) according to claim 19, the display (1) comprising an information receiving means (3) for receiving said digital data from a communications network (4) or a local storage device (5).

21. Display (1) according to claim 20, the display (1) comprising a second information receiving means (3') for receiving information according to which the position of the virtual visual object (2) on the display (1) is determined.

22. Display (1) according to claim 21, the display (1) comprising an input device (6) for inputting said information to be sent to the second receiving means (3').

23. Display (1) according to claim 21, the display (1) comprising a pattern recognition system (7) for supplying said information to the second receiving means (3').

24. Display (1) according to any of the claims 19-23, whereby the luminance of the displayed virtual visual object (2) is correlated to the luminance of the real-time world information that is visible through the display (1).

25. Display (1) according to any of the claims 19-24, whereby the display (1) is comprised by a pair of glasses.
